# EUROPEAN PATENT APPLICATION

(11) **EP 4 809 981 A1**
(43) Date of publication of application: **23.09.2026**
(21) Application number: 25165039.6
(22) Date of filing: 20.03.2025
(51) Int. Cl.: A61C 17/36

(54) **ORAL HEALTH CARE DEVICE**

(71) Applicant: Koninklijke Philips N.V., 5656 AE Eindhoven (NL)
(72) Inventor: VAN DEN DUNGEN, Wilhelmus Andreas Marinus Arnoldus Maria, Eindhoven (NL); VAN LIESHOUT, Ron Martinus Laurentius, Eindhoven (NL); BHAT, Ravindra, Eindhoven (NL)
(74) Representative: Philips Intellectual Property & Standards

(57) **Abstract**

Proposed concepts thus aim to provide schemes, solutions concepts, designs, methods, and systems pertaining to an oral health care device containing a driven treatment component and a first passage within which gas and/or liquids can flow. In particular, embodiments provide a valve for controlling the flow of gases and/or liquids within the passage in a first direction and a biasing system for biasing the valve such that when the driving means is not activated the valve is in a first position which prohibits the flow of fluids in the passage in the first direction, and when the driving means is activated the valve is in a second position which permits the flow of fluids in the passage in the first direction.

## Description

### FIELD OF INVENTION

The present invention pertains to the field of oral health care devices, and more particularly to powered oral health care devices.

### BACKGROUND

Modern oral health care devices often contain powered components. For example, electric toothbrushes may contain a motor-driven brush head. The brush head is driven to vibrate or rotate when a user is brushing their teeth, to improve cleaning performance compared to manual brushing. Other powered oral health care devices include cleaning mouthpieces and oral irrigators. Any of these devices may combine powered treatment components with other functionalities for providing improved health care treatment. A certain category of additional functionality which may be provided in such devices requires that fluid flows within the oral health care device be controlled.

For example, in oral irrigators a jet of water or other cleaning fluid is directed towards the user's teeth and gums to provide additional cleaning of a user's oral surfaces. Such devices may be particularly effective at cleaning surfaces between the user's teeth and gums. In some devices, irrigation capabilities are combined with brushing components to achieve even greater cleaning performance. It may be beneficial for oral irrigator devices if the passage of fluid within the oral health care device that forms the cleaning jet can be controlled to work co-operatively with any powered treatment component.

As another example, oral health care devices may be configured to obtain saliva samples from the user. In recent years there has been an interest in developing unobtrusive means for measuring systemic health of patients. One method of monitoring that has been developed, is the sampling of saliva and oral originating gases during an individual's oral health care routine. Studies have shown that there is a direct relationship between these gases and the development of health conditions. Since most people perform an oral health care routine twice every day, combining gas and saliva sampling with oral health care allows for continuous unobtrusive measuring of subject health. Devises configured for gas and/or saliva sampling are another example of a type of oral health care device that combines a powered treatment component with a controlled fluid flow.

In both oral irrigators and oral health care devices configured for gas and/or saliva sampling it may be beneficial for fluid flow within the oral health care device to be controlled such that it is timed with the action of the powered treatment component in order to produce more effective oral health care treatment.

### SUMMARY OF INVENTION

The invention is defined by the claims.

According to examples in accordance with an aspect of the invention, there is provided an oral health care device comprising: a treatment component for performing an oral health care treatment; driving means adapted when activated to perform an action that causes motion of the treatment component; a first passage configured to permit liquids and/or gases to flow within the first passage in a first direction; a valve configured to control the flow of liquids and/or gases within the first passage; and a biasing system for biasing the position of the valve, the biasing system comprising: a first biasing configuration adapted to bias the valve to a first position when the driving means is not activated, wherein in the first position the valve prevents the flow of liquids and/or gases in the first direction within the first passage; and a second biasing configuration adapted to interact with the action of the driving means, when the driving means is activated, to bias the valve to a second position, wherein in the second position the valve permits the flow of liquids and/or gases in the first direction within the first passage.

Proposed concepts thus aim to provide schemes, solutions concepts, designs, methods, and systems pertaining to an oral health care device containing a driven treatment component and a first passage within which gas and/or liquids can flow. In particular, embodiments provide a valve for controlling the flow of gases and/or liquids within the first passage and a biasing system for biasing the valve such that when the driving means is not activated the valve is in a first position which prohibits the flow of fluids in the first passage, and when the driving means is activated the valve is in a second position which permits the flow of fluids in the first passage.

Modern oral health care devices may combine powered treatment components with fluid-related functions such as oral irrigation and/or the collection or oral gases and saliva for monitoring systemic health of a user. It may be beneficial for both of these functionalities if the flow of fluid into or out of the device can be controlled such that it is responsive to the activation of the powered component.

In devices equipped for sampling gases and saliva from a user's oral cavity it is important that the sample is taken at the right time in the user's oral health care routine to ensure that accurate information about the user's health can be derived. If the sample is taken before the user inserts the oral health care device into their mouth, then the sample taken will not contain any gases or liquids originating from the user and therefore cannot be used to derive any information about the user's health. If the sample is taken too late into the user's oral health care routine, other substances such as toothpaste and the gases released when toothpaste foams during brushing may contaminate the sample. It is therefore beneficial if the sample can be taken right at the start of a user's oral cleaning session.

The present invention solves the problem of implementing such a system by the inclusion of a valve and associated biasing system. The valve and biasing system of the present invention are configured to interact with the driving means for driving the treatment component such that, when the driving means is not activated the valve is biased to a first position in which the passage of fluid along the first passage in the first direction is prevented, and when the driving means is activated the valve is biased to a second position in which the passage of fluid along the first direction is permitted. In other words, the valve is configured to switch from a first closed position to a second open position when the driving means is activated. This results in the sample being taken right at the start of the brushing session which corresponds to the time when the most accurate results can be derived.

This principle of controlling the flow of fluid within the oral health care device to be responsive to the action of the driving means may also be advantageous for oral health care devices equipped with other fluid flow functionalities. For example, in oral irrigator devices. In this case, the valve of the present invention ensures that when motion of the treatment component is activated by the driving means, fluid is allowed to flow out of the device to perform the irrigation function, and when the driving means is not activated, fluid flow is prohibited. This ensures that fluid does not leak or flow from the device when the device is not in use. Further, in devices that comprise both oral irrigation and brushing functionalities, the synchronisation of the action of the oral irrigator and the action of the treatment component may result in improved cleaning performance.

It was therefore realised that improved function of a powered oral health care device that involves a flow of liquid and/or gas may be achieved by the inclusion of a valve that is configured to be triggered by the activation of the driving means of the device to switch from a position in which the valve prevents the flow of liquids and/or gases in the first direction within the first passage (the closed or rest position of the valve), to a position in which the valve permits the flow of liquids and/or gases in the first direction within the first passage (the open position of the valve). The proposed concept(s) may therefore provide a vibration induced valve arrangement.

Ultimately, an improved oral health care device may be provided by the proposed concepts(s).

In some embodiments, the first passage may comprise an inlet for receiving, during use of the oral health care device on a subject, liquids and/or gases from the oral cavity of the subject. The proposed invention may be particularly advantageous in devices for oral gas and/or saliva sampling. When fluid sampling is timed with the activation of the treatment component by the driving means, the information about a subject's health that is derived from the sample may be more accurate.

In some embodiments, the first biasing configuration may comprise at least one of: a spring; a magnet; a gravitational force applied to the valve; and a frictional force applied to the valve. Each of these configurations provides a simple way of applying a suitable force to the valve to ensure that the valve is biased to the first position when the driving means is not activated.

In some embodiments, the second biasing configuration may comprise at least one of: a spring; a magnet; a gravitational force applied to the valve; a frictional force applied to the valve; a negative pressure system adapted to apply a pressure to the valve; and at least one support structure configured to urge the valve towards the second position. These configurations may be each be configured to reliably interact with the action of the driving means such that the valve is biased to the second position when the driving means is activated. As discussed above, this may be beneficial for coordinating the various oral health care functionalities provided by the device.

In some embodiments, when the driving means is activated the action of the driving means may cause the valve to vibrate, and the second biasing configuration may comprise the negative pressure system, the negative pressure system comprising a pump configured to apply a suction force to the valve such that when the valve is caused to vibrate the suction force biases the valve to the second position. By controlling the magnitude of the suction force, such a system provides a simple way in which it can be reliably ensured that the second biasing configuration only biases the valve to the second position when the driving means is activated, and the valve is caused to vibrate.

In some embodiments, the biasing system may comprise a guide structure configured to guide the movement of the valve between the first and second positions, and the second biasing configuration may comprise the at least one support structure, the at least one support structure comprising a plurality of flexible support structures disposed on an inner surface of the guide structure, wherein, when the driving means is activated, the action of the driving means causes the plurality of flexible support structures to vibrate, and wherein the vibration of the plurality of flexible support structures biases the valve to the second position. This embodiment may advantageously allow for a completely passive configuration of the biasing system such that the valve can be switched from the first to the second positions as a result of the action of the driving means, without requiring any additional powered components.

In some embodiments, the biasing system may further comprise a non-Newtonian material between the guide structure and the plurality of flexible support structures. The presence of a non-Newtonian material may increase the force the flexible support structures apply to the valve when they vibrate. This embodiment may therefore advantageously result in quicker switching of the valve from the first to the second position when the driving means is activated.

In some embodiments, the plurality of flexible support structures may comprise a plurality of elongate projections, wherein each of the plurality of elongate projections extends at an angle to the direction between the first and second positions. This structure is simple to implement and reliably biases the valve to the second position when the driving means is activated.

In some embodiments, the second biasing configuration may comprise the at least one support structure and the at least one support structure may comprise a channel for guiding the valve between the first and second positions, wherein the channel comprises at least one helical groove extending along a surface of the channel between the first and second positions and the valve comprises at least one protrusion configured to slot into the at least one helical groove of the channel, and wherein the second biasing configuration is adapted such that, when the driving means is activated, the action of the driving means causes the channel to perform rotary vibration and the rotary vibration of the channel biases the valve to the second position. This embodiment provides another structural and passive solution for implementing vibration induced valve switching. Advantageously, this embodiment may be simple to fabricate and compact.

In some embodiments, the second biasing configuration may comprise the at least one support structure, and the at least one support structure may comprise a channel for guiding the valve between the first and second positions, wherein the channel comprises at least one helical protrusion extending along a surface of the channel between the first and second positions, and the valve comprises at least one groove configured to accommodate the at least one helical protrusion of the channel, and wherein the second biasing configuration is adapted such that, when the driving means is activated, the action of the driving means causes the channel to perform rotary vibration, and the rotary vibration of the channel biases the valve to the second position. This is a simple structural alternative to the embodiment described above and therefore may provide the same functionality. As such, this embodiment may be advantageous in that is easy to manufacture and may be made to be compact.

In some embodiments the valve may comprise a disc with a partial opening and the second biasing configuration may comprise a housing of the disc configured to apply a frictional force to the valve, wherein, when the driving means is activated, the action of the driving means causes the disc to vibrate, and wherein the housing of the second biasing configuration interacts with the vibration of the disc via a frictional force to bias the disc towards a second position. This embodiment may be advantageous in that the relative size of the disc of the valve and the housing of the biasing means can be controlled to adjust the sensitivity of the valve to the action of the driving means.

In some embodiments, the biasing system may comprise: a spring; a first bellow connected to the spring; and a second bellow connected to the first bellow such that fluid can flow between the first and second bellows, and wherein the valve is positioned between the first and second bellows. A passive pump configuration such as this provides an alternative mechanism by which a valve that is responsive to vibrations induced by the driving means of the oral health care device can be implemented using simply constructed components.

In some embodiments, the oral health care device may further comprise a second passage configured to permit liquids and/or gases to flow within the second passage in a second direction, and the valve may be further configured to control the flow of liquids and/or gases within the second passage, such that in the first position the valve permits the flow of liquids and/or gases in the second direction within the second passage, and in the second position the valve prevents the flow of liquids and/or gases in the second direction within the second passage. In some devices it may be advantageous that not all fluid flow is prevented when the valve is in the first position. For example, in gas/saliva sampling it may be useful to obtain a sample before the oral health care session begins to act as a reference sample. In this embodiment, the valve is configured such that when it is in the first position, the flow of liquids and/or gases in a second direction along a second passage is permitted such that this reference sample can be obtained.

In some embodiments the treatment component may be configured, during use of the oral health care device on a subject, to engage with an oral surface of the subject, and the first biasing configuration may be adapted such that, when the treatment component engages with the oral surface, the first biasing means interacts with the engagement of the treatment component with the oral surface of the subject to bias the valve to the second position. This embodiment provides a precise time window in which the valve is activated by the biasing system to permit the flow of fluid within the first passage in the first direction in the time interval between the driving means being activated and the oral health care device being applied to the subject's oral surfaces.

In some embodiments, the treatment component may comprise a brush head component for brushing the teeth and gums of a subject during use of the oral health care device. The main use of the invention may be in brushing oral health care devices, but the principles of the invention may also be useful for devices configured for performing other oral health care treatments.

Embodiments may be employed in combination with conventional/existing oral health care devices. In this way, embodiments may integrate into legacy systems to improve and/or extend their functionality and capabilities. An improved oral care device including a selectively activated valve mechanism may therefore be provided by proposed embodiments.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified diagram of an oral health care device according to a proposed embodiment;
Fig. 2 is a simplified diagram of an oral health care device according to another proposed embodiment;
Figs. 3A and 3B are simplified diagrams depicting a valve and biasing system which may be included in an oral health care device of the invention;
Fig. 4A to 4C depict simplified diagrams of a valve and biasing system according to another proposed embodiment of the invention;
Fig. 5 depicts a valve and biasing system in which the biasing system comprises a non-Newtonian fluid;
Figs. 6A and 6B show birds-eye and perspective views respectively of another possible embodiment of the valve and biasing system of the invention;
Figs. 7A and 7B depict a valve and biasing system according to an embodiment of the invention in which the valve comprises a disc with a partial opening; and
Figs. 8A and 8B depict a passive pump valve and biasing system according to another embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems, and methods, are intended for the purpose of illustration only and are not intended to limit the scope of the invention. These and other features, aspects, and advantages of the apparatus, systems, and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Implementations in accordance with the present disclosure relate to various techniques, methods, schemes, and/or solutions pertaining to oral health care devices. According to proposed concepts, a number of possible solutions may be implemented separately or jointly. That is, although these possible solutions may be described below separately, two or more of these possible solutions may be implemented in one combination or another.

Embodiments of the proposed invention aim to provide an improved oral health care device in which fluid functionalities are coordinated with the action of a powered treatment component. This is achieved via the implementation of a valve for controlling the flow of fluid and a biasing system for biasing the valve to different positions. The valve in configured to exist in at least two possible positions, a first position in which the valve permits the flow of liquids and/or gases in a first direction within a first passage of the oral health care device, and a second position in which the valve prevents the flow of liquids and/or gases in the first direction within the first passage. The biasing means is configured to interact with the action of a driving means of the device such that when the driving means is not activated the valve is biased to the first position and when the driving means is activated the valve is biased to the second position. As such, the activation of the driving means initiates a switch of the valve from the first to the second position.

In the context of the present invention the term "bias" is used to refer to the fact that the biasing system may interact with the valve such that under certain conditions the valve is more likely to be found in one position than another. For example, this may involve the biasing system applying a certain force to the valve to force the valve to be in the first or second positions. When the driving means is activated the first and second biasing configurations of the biasing system interact with the valve and the action of the driving means to switch the valve from the first position to the second position. Therefore, upon activation of the driving means, the valve is forced to move or switch between the first and second positions. This movement may comprise a rotation or a translation of the valve (or a combination of both).

Applications of the proposed invention are discussed in the context of both oral irrigators and oral health care devices configured for gas and/or saliva sampling.

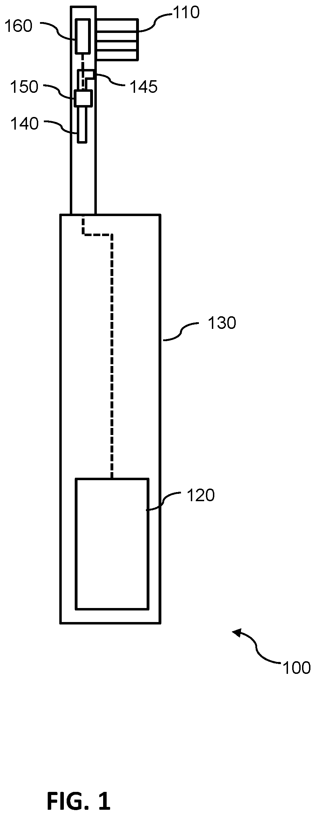

Referring now to Fig. 1, there is depicted a simplified diagram of an oral health care device 100 according to an embodiment of the invention.

The oral health care device 100 comprises a treatment component 110 for performing an oral health care treatment. In this embodiment, the treatment component comprises a brush head component for brushing the teeth and gums of a subject during and is connected to a body 130 of the oral health care device.

The oral health care device 100 further comprises driving means 120 adapted, when activated, to perform an action that causes motion of the treatment component 110. In this embodiment the driving means 120 is housed in the body 130 of the oral health care device. The driving means 120 may comprise any suitable conventional/existing or novel means which drive the treatment component to move. For example, the driving means may comprise a motor. The driven motion of the treatment component 110 may comprise at least one of: a vibration; a rotation; and a reciprocal motion. Activation and deactivation of the driving means 120 may arise via the action of switch, which the subject can operate by pressing a button on the exterior of the body 130. Other means for selective activation of the driving means 120 will be known and understood by those working in the field.

As shown in Fig. 1, the oral health care device 100 further comprises a first passage 140 configured to permit liquids and/or gases to flow within the first passage in a first direction. In this embodiment the first passage comprises an inlet 145 for receiving, during use of the oral health care device on a subject, liquids and/or gases from the oral cavity of the subject. In this instance, the first direction is therefore a direction from the inlet 145 inwards into the oral health care device and along the extent of the first passage 140. The oral health care device 100 is therefore adapted to be able to obtain a sample of gases and/or liquids from the oral cavity of the subject when the device is in use. The obtained sample may be analysed to derive insights into the subject's systemic health.

The oral health care device 100 further comprises a valve 150 configured to control the flow of liquids and/or gases within the first passage, and a biasing system 160 for biasing the position of the valve. The biasing system 160 comprises: a first biasing configuration adapted to bias the valve to a first position when the driving means is not activated, wherein in the first position the valve prevents the flow of liquids and/or gases in the first direction within the first passage; and a second biasing configuration adapted to interact with the action of the driving means when the driving means is activated to bias the valve to a second position, wherein in the second position the valve permits the flow of liquids and/or gases in the first direction within the first passage.

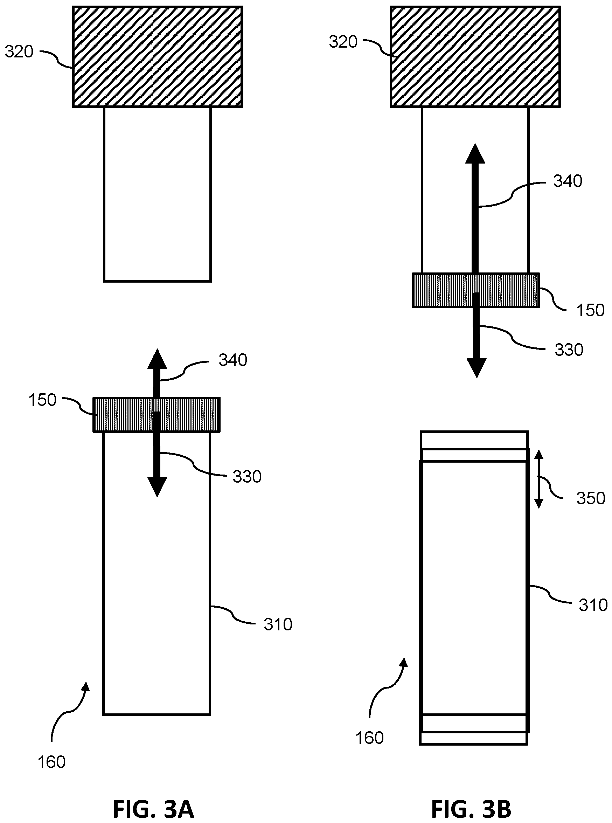

In this exemplary embodiment, the first biasing configuration comprises at least one of: a spring; a magnet; a gravitational force applied to the valve; and a frictional force applied to the valve. The second biasing configuration in this embodiment comprises at least one of: a spring; a magnet; a gravitational force applied to the valve; a frictional force applied to the valve; a negative pressure system adapted to apply a pressure to the valve; and at least one support structure configured to urge the valve towards the second position. More details of possible implementations of the valve 150 and the biasing system 160 are provided below with reference to Figs. 3A-B, 4A-C, 5, 6A-B, 7A-B, and 8A-B.

The oral health care device 100 is therefore configured to allow for selective sampling of saliva and oral originating gases of a subject. The configuration of the valve and biasing system ensures that sampling only commences once the device is actually in use and the driving means is switched on. This ensures that the sample taken comprises gases and/or liquids originating from the oral cavity of the subject rather than from external air. Further, since the valve and biasing means are configured to respond directly to the activation of the driving means, the device is configured such that sampling commences right at the start of the brushing treatment. This ensures that the sample is not contaminated by gases produced by the foaming of toothpaste used during the treatment.

Whilst in the exemplary embodiment shown in Fig. 1 the treatment component 110 comprises a brush head component, the invention is not limited to such. In other embodiments, the treatment component may comprise at least one of: a cleaning component; a mouthpiece component; and a fluid jet component. Thus, the treatment component 110 may comprise any suitable component for performing an oral health care treatment that involves the treatment component being driven to move by a driving means.

Similarly, other aspects of the oral health care device 100 may be implemented differently in alternative embodiments. Whilst in Fig. 1, the first passage 140, the valve 150, and the biasing system 160 are all depicted to reside in the treatment component 110, this need not be the case in other embodiments. For example, the first passage may extend into the body 130 of the device. Alternatively, or in addition, the first passage 140, the valve 150, and the biasing system 160 may be distributed between the treatment component 110 and the body 130 or only within the body 130.

The first and second biasing configurations are not restricted to those implementations outlined above. The first biasing configuration may comprise any configuration that biases the valve to the first position when the driving means is not activated and the second biasing configuration may comprise any configuration adapted to interact with the action of the driving means to bias the valve to the second configuration when the driving means is activated.

The oral health care device 100 is configured for sampling oral gases and/or saliva from a subject's oral cavity during use of the oral health care device. In some implementations of this device, first passage 140 may further comprise one or more sensor for measuring a fluid within the first passage. For example, the one or more sensors may comprise a sensor for measuring the composition of the liquids and/or gases within the first passage. This may enable analysis of the sampled fluids to take place within the oral health care device 100 for monitoring the systemic health of the subject. However, in other embodiments these may not be included within the device and the obtained fluid sample may be analysed externally.

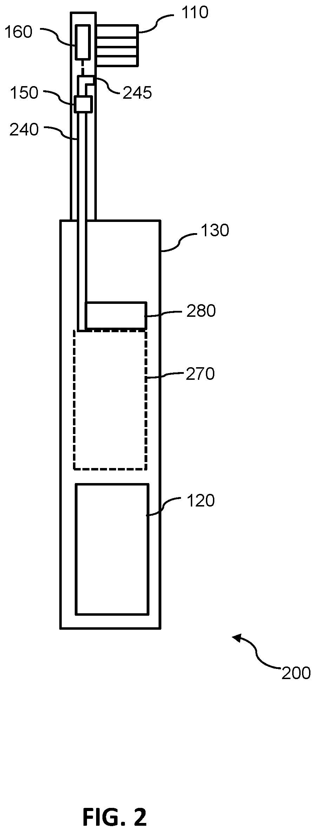

Referring now to Fig. 2, there is depicted an oral health care device 200 according to another embodiment of the invention. In this embodiment the oral health care device is configured for oral irrigation.

The oral health care device 200 comprises a treatment component 110, a driving means 120, a body 130, a valve 150, and a biasing system 160. These elements are equivalent to the corresponding components in the oral health care device 100 and therefore the description of these components will not be repeated.

The first passage 240 of the oral health care device 200 differs from the first passage 140 of the oral health care device 100 in that it comprises an outlet 245 for providing a fluid to the oral surfaces of the subject. The first passage 240 connects to a reservoir 270 within the body 130 which contains a reserve of the fluid to be supplied to the oral surfaces of the subject. A pump 280 is also included within the oral health care device 200 and is configured, during use of the device, to pump fluid from the fluid reservoir along the first passage 240 to the outlet 245. In this example the first direction is therefore a direction from the fluid reservoir 270, along the first passage 240, to the outlet 245.

The biasing system 160 of the oral health care device 200 is configured such that when the driving component is not activated the valve is biased to a first position (a rest position) in which the valve prevents fluid from flowing along the first passage and out of the oral health care device via the outlet 245. However, when the driving means 120 is activated to cause motion of the treatment component 120, the biasing system is configured such that the valve 150 becomes biased to a second position in which fluid is permitted to flow from the reservoir 270 along the first passage 240 and exit via the outlet 245.

In the oral irrigator device 200, the configuration of the valve 150 and biasing system 160 advantageously ensures that fluid does not flow out of the device when the device is not in use, for example if the device is accidently dropped or tipped upside down. Further, the oral irrigation functionality of the device is coordinated with the actions of the treatment component to improve the effectiveness of the combined cleaning treatment. Thus, the principles of the proposed invention may be equally well applied to an oral irrigator device as to an oral health care device configured for gas and/or saliva sampling.

Although in Fig. 2, the valve and biasing means are depicted to sit at the end of the first passage 240 which is closest to the outlet 245 within the treatment component 110, in other embodiments, the valve and biasing system may sit within the body 130.

In both the oral health care device 100 and the oral health care device 200 described above the valve 150 controls the flow of liquids and/or gases within a single passage (the first passage). In alternative embodiments of these devices, the oral health care device further comprises a second passage configured to permit liquids and/or gases to flow within the second passage in a second direction. The valve 160 is then further configured to control the flow of liquids and/or gases within the second passage, such that in the first position the valve permits the flow of liquids and/or gases in the second direction within the second passage, and in the second position the valve prevents the flow of liquids and/or gases in the second direction within the second passage. Thus, the device is adapted to allow a two-directional flow of fluids and upon activation of the oral health care device the valve switches from permitting the flow of fluids in the second direction along the second passage to permitting the flow of fluids in the first direction along the first passage. This principle could be utilised in the oral health care device 100 to direct sampled liquids and/or gases to a specific measurement or sampling chamber so as to obtain both a reference sample corresponding to when the device is not in use and a subject sample corresponding to gases and/or saliva from the subject.

Figs. 3A-B, 4A-C, 5, 6A-B, 7A-B, and 8A-B will now be described below and depict several possible detailed implementations of the valve 150 and the biasing system 160 in accordance with principles of the proposed invention. Whilst the components depicted in these figures are discussed below in the context of the oral health care device 100, it will be understood that the described embodiments of the valve 150 and the biasing system 160 may also be applied to the oral health care device 200.

Referring now to Figs. 3A and 3B, there is depicted a valve 150 and biasing system 160 according to a proposed embodiment of the invention. The valve 150 and the biasing system 160 sit within the oral health care device 100 as shown in Fig. 1.

Fig. 3A shows the valve 150 when it is in a first position in which it blocks the entrance to the channel 310. In this example, the channel 310 is a hollow tube with a circular cross section and the valve 150 comprises a circular disc with a diameter greater than the diameter of the channel 310. However, this embodiment is not limited to this geometric configuration and the cross section of the channel 310 may be for example a square, a rectangle, a triangle, an oval, or any suitable polygon. The channel 310 is connected to the first passage 140 such that when the valve 150 is in the first position and blocks the entrance to the channel 310, liquids and/or gases are prevented from flowing along the first passage in a first direction.

The biasing system 160 in this exemplary embodiment, comprises a first biasing configuration which biases the valve to the first position when a driving means of the oral health care device is not activated. In other words, when the oral health care device is not in use, or at least the treatment component of the device is not being driven to move, the valve 150 is configured to sit in the first position. In this particular embodiment, the first biasing configuration comprises a gravitational force 330 which biases the valve to the first position. In other words, the mass of the valve 150 and the relative orientation of the valve 150 and the biasing system 160 within the oral health care device 100 are such that the weight of the valve 150 holds the valve in the first position when the driving means are not activated.

The biasing system 160 further comprises a second biasing configuration. In this exemplary embodiment, the second biasing configuration comprises a pump 320 configured to apply a suction force (indicated by the arrow 340) to the valve 150. As shown in Fig. 3A, when the valve 150 is in the first position, the gravitational force 330 is greater than the suction force 340 and as such, when the driving means is not activated, the valve sits in the first position.

Fig. 3B depicts the behaviour of the valve 150 and the biasing means 160 when the driving means of the oral health care device is activated. The action of the driving means which causes the motion of the treatment component, results in the channel 310 vibrating (as indicated by the double headed arrow 350). The vibration of the channel 310 causes the valve 150 to also vibrate and jump up and down from its rest position (the first position).

During the upwards motion of its vibration, the distance between the valve 150 and the pump 320 will decrease. As this occurs, the suction force 340 applied to the valve 150 by the pump 320 will increase due to the increased proximity between the valve and the pump. However, the gravitational force acting on the valve 150 will remain constant and therefore the system may be configured such that, when the valve vibrates, the magnitude of the suction force 340 is greater than the magnitude of the gravitational force 330 and the valve 150 is forced upwards, towards the position of the pump 320. In other words, the pump 320 is configured to apply a suction force to the valve 150 such that when the valve is caused to vibrate the suction force interacts with this vibration and biases the valve to the second position.

The valve 150 is shown in the second position in Fig. 3B. In the second position the valve 150 no longer blocks the entrance to the channel 310 and therefore permits the flow of liquids and/or gases in the first direction within the first passage.

At a certain point in time, the pump 320 may be configured to stop applying the suction force 340. This may occur after a fixed time interval from the activation of the driving means or in response to the treatment component being applied to an oral surface of the subject. Once the suction force is no longer applied to the valve 150, the gravitational force 330 is once again dominant and biases the valve back to the first position.

Whilst in the embodiment shown in Fig. 3A and Fig. 3B the first biasing configuration comprises a gravitational force applied to the valve 150, in other embodiments of the invention this need not be the case. A similar effect may be achieved when the first biasing configuration comprises a spring and/or a magnetic force applied to the valve 150. Alternatively, the biasing system 160 may comprise a secondary pump positioned at the base of the channel 310 and configured to apply a suction force to the valve 150 in the same direction as the gravitational force 330. This may be particularly advantageous in oral care devices configured for gas and/or saliva sampling, in that the secondary pump can also apply a negative pressure force to draw a flow of liquids and or gases down the first passage in the first direction to capture a sample of those fluids.

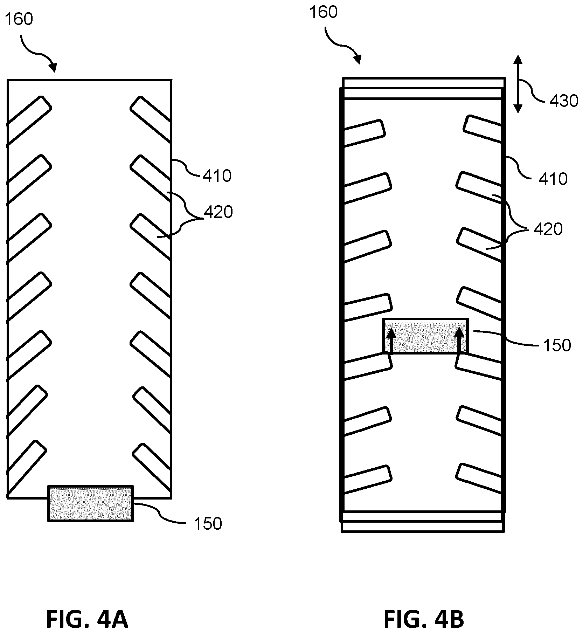

Referring now to Figs. 4A-4C, there is depicted simplified diagrams of a valve 150 and biasing system 160 according to another proposed embodiment of the invention.

Fig. 4A shows the valve 150 in a first position. The valve is positioned within the oral health care device 100 such that when the valve 150 is in the first position the valve prevents the flow of liquids and/or gases in the first direction within the first passage 140.

The first biasing configuration of the biasing system 160 biases the valve 150 to be in the first position when the driving means 120 of the oral health care device 100 is not activated. Once again, in this example, the first biasing configuration comprises simply the configuration and orientation of the biasing system 160 and the valve 150 within the oral health care device 100 such that the valve 150 is biased to the first position by a gravitational force. A similar result may be achieved by a spring and/or magnet.

The biasing system 160 in this exemplary embodiment further comprises a guide structure 410 configured to guide the movement of the valve between the first and second positions. The guide structure in this example is a channel configured to receive the valve 150 and allow the passage of the valve from one end of the guide structure to the other. In this exemplary embodiment, the first and second positions lie at either end of the guide structure 410.

The second biasing configuration of the biasing system 160 in this example, comprises a plurality of flexible support structures 420 disposed on an inner surface of the guide structure 410. The plurality of flexible support structures 420 comprises a plurality of elongate projections, wherein each of the plurality of elongate projections extends at an angle to the direction between the first and second positions as shown in Fig. 4A. The dimension and material of the plurality of flexible support structures are selected such that when the driving means 120 of the oral health care device 100 is not activated, the plurality of flexible support structures 420 do not interact with the valve 150 no matter its position within the guide structure 410. In other words, the biasing system 150 is configured such that, when the driving means 120 is not activated and the biasing system 160 is at rest, the level of friction between the valve 150 and the plurality of flexible support structures 420 is insufficient to inhibit the motion of the valve within the guide structure 410.

Fig. 4B depicts the action of the biasing system 160 and the valve 150 when the driving means 120 of the oral healthcare device 100 is activated. The action of the driving means when activated causes the guide structure 410 and the plurality of flexible support structures 420 to vibrate, as indicated by the double headed arrow 430. This in turn causes vibratory up and down motion of the valve 150. Due to the configuration of the plurality of flexible support structures, the vibration of the plurality of flexible support structures biases the motion of the valve such that the valve is urged upwards from the first position to the second position.

The flexible nature of the plurality flexible support structures means that when the bases of these structures are caused to vibrate due to the vibration of the guide structure 410, each of the plurality of flexible support structures performs a back and forth motion with a particular stroke length which may be larger than the stroke length of the vibration of the guide structure 410. Whilst the plurality of flexible support structures do not interact with the valve when the device is at rest, the stroke of the vibratory motion of the plurality of flexible support structures is sufficiently large that they do interact with the valve 150 during their vibration. Therefore, the biasing system 160 is configured such that, with each stroke of the plurality of flexible support structures 420, an upwards force is applied to the valve 150 in the direction from the first to the second position. The upwards direction of the force is achieved by configuring each of the plurality of flexible support structures to be angled with respect to the direction between the first and second positions and/or through the choice of flexible material(s) for the plurality of flexible support structures.

Hence, the plurality of flexible support structures 420 of the second biasing configuration of the biasing system 160 are configured to interact with the vibration of the valve caused by the action of the driving means 120 so as to apply an upwards force to the valve 150 in the direction between the first and second positions. As such, the interaction of the plurality of flexible support structures with the action of the driving means 120 biases the valve to the second position.

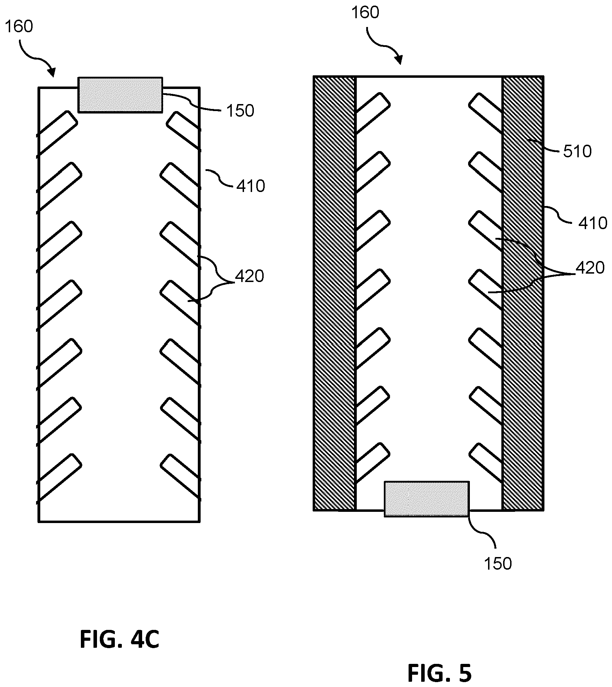

Fig. 4C shows the valve 150 in the second position, at the upper end of the guide structure 410. The valve 150 and the biasing system 160 are positioned within the oral health care device 100 such that in this position, the valve 150 permits the flow of fluids in the first direction in the first passage.

Once the driving means is deactivated, the vibration of the guide structure 410 and the plurality of flexible support structures 420 ceases. As described above, when not vibrating the flexible support structures do not apply an upward force to the valve 150. Therefore, once the driving means is deactivated the valve returns to the first position at the bottom of the guide structure 410 under the action of gravity. **In** some embodiments, the return of the valve 150 to the first position may also be induced whilst the driving means is still activated through the action of a spring or magnetic force.

Fig. 5 shows an alternative embodiment to that shown in Figs. 4A-4C comprising the valve 150 and an alternative biasing system 160. The biasing system 160 of the embodiment of Fig. 5 differs from the biasing system 160 depicted in Figs. 4A-4C in that it further comprises a non-Newtonian material 510 between the guide structure 410 and the plurality of flexible structures 420.

Non-Newtonian fluids such as that used in the non-Newtonian material 510 have a viscosity value that is dependent on the stress applied to the fluid. When the driving means 120 is not activated and there is no vibration of the biasing system 160, the non-Newtonian material is in a low viscosity state. The plurality of flexible support structures 420 are therefore able to freely move, allowing the valve 150 to move within the guide structure 410 with low friction. However, when the driving means is activated and the biasing system 160 is caused to vibrate, the viscosity of the non-Newtonian material 150 may increase. Hence the vibrating non-Newtonian material 150 may act as a stiff support base for the plurality of flexible support structures 420, increasing the magnitude of the upward force that is transferred to the valve 150 by the vibration of the flexible support structures.

Thus, in this embodiment the responsiveness of the biasing system to the action of the driving means may be enhanced.

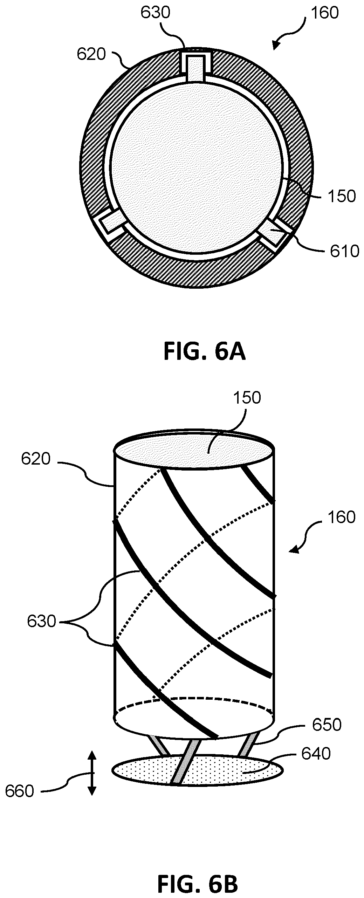

Figs. 6A and 6B show birds-eye and perspective views respectively of another possible implementation of the valve 150 and the biasing system 160 which may be used in the oral health care device 100 or the oral health care device 200.

In this embodiment, the first biasing configuration of the biasing system 160 comprises at least one of: a spring; a gravitational force; and a magnetic force. The first biasing configuration biases the valve to a first position when the driving component of the oral health care device is not activated, wherein in the first position the valve prevents the flow of fluid through the first passage in the first direction.

In this embodiment, the second biasing configuration of the biasing system 160 comprises at least one support structure, wherein the at least one support structure comprises a channel 620 for guiding the valve between the first and second positions. The channel 620 comprises at least one helical groove 630 extending between the first and second positions, such that when in the first position the valve is positioned at the bottom end of the channel 620, and when in the second position the valve is positioned at the top of the channel 620. In this exemplary embodiment, the valve 150 comprises at least one protrusion 610 configured to slot into the at least one helical groove 630 of the channel.

Although in Figs. 6A and 6B there are three grooves 630, and three corresponding protrusions 610, the invention is not limited to this example and the number of grooves 630 and corresponding protrusions 610 may comprise any number. For example, the number of the grooves and the number of protrusions may be between 1 and 10, or between 1 and 100. The incline of the helical spiral of the grooves 640 may be adjusted depending on the required responsiveness of the valve to the activation of the driving means.

In this exemplary embodiment, the second biasing configuration of the biasing system 160 further comprises a base 640 and a plurality of inclined leaf springs 650.

The valve 150 and the biasing system 160 works on the principle of a bowl feeder mechanism. When the driving means 120 is activated, the action of the driving means causes the base 640 and the leaf springs 650 of the biasing system 160 to vibrate up and down as indicated by the double headed arrow 660. The presence of the plurality of leaf springs 650 translates the vibratory motion of the base 640 to a rotary vibration of the channel 620. In other words, the vibration of the base 640 and the plurality of inclined leaf springs 650 cause the channel 630 to perform both linear vibratory motion (up and down), and rotational motion (rotating back and forth about the central axis of the channel 620).

Due to the helical nature of the helical groves 630, as the channel 620 performs rotary vibration the valve 630 is forced up the path of the helical grooves from the first position, at the base of the channel 620, to the second position, at the top of the channel 620.

As such the second biasing configuration biases the valve such that when the driving means 120 is activated the channel 620 performs a rotary vibration, and the rotary vibration of the channel biases the valve to the second position.

The embodiment shown in Figs. 6A and 6B may be equally well implemented when the channel comprises at least one helical protrusion (as opposed to at least one helical groove) extending along a surface of the channel between the first and second positions, and the valve comprises at least one groove configured to accommodate the at least one helical protrusion of the channel.

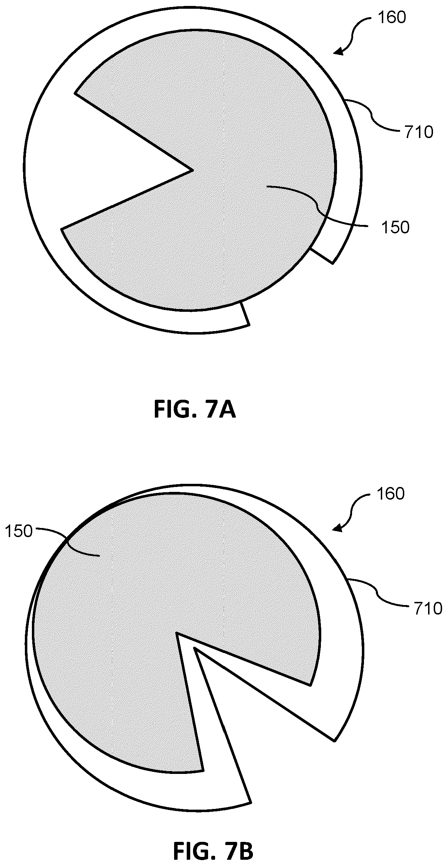

Referring now to Figs. 7A and 7B there is depicted a valve 150 and biasing system 160 according to an embodiment of the invention in which the valve 150 comprises a disc with a partial opening. In this embodiment, the biasing system 160 comprises a housing 710 configured to accommodate the disc 150.

Fig. 7A shows the valve 150 in a first position. In the first position the partial opening of the disc 150 is not aligned with an opening in the housing 710 within which the disc sits. As such, when in the first position, the valve prevents the flow of fluids through the opening of the housing, thereby prohibiting the flow of liquids and/or gases within the first passage 140 in the first direction. Although not shown, the first biasing configuration of the biasing system 160 in this embodiment may comprise at least one of a spring and a magnet configured to bias the valve to the first position when the driving means of the oral health care device is not activated.

In this embodiment, the second biasing configuration of the biasing system 160 comprises the housing 710 which is configured to apply a frictional force to the valve. When the driving means is activated, the action of the driving means causes the disc to vibrate. The housing 710 of the second biasing configuration interacts with the vibration of the disc via a frictional force and this biases the disc towards a second position. Thus, the housing 710 is configured to interact with the action of the driving means, and the vibration of the valve 150 that results, in order to force a rotation of the valve 150 from a first position as shown in Fig. 6A to a second position as shown in Fig. 6B. In the second position, the partial opening of the valve is sufficiently aligned with the opening of the housing 710 and therefore permits the flow of liquids and/or gases in the first direction along the first passage.

The rotation of the disc 150 in a particular direction from the first position to the second position be achieved by selection of the material and/or surface structure of the housing 710. In this way the housing 710 may be adapted such that the frictional force applied by the housing 710 to the disc 150 when they come into contact is greater in one rotational direction than the opposite rotational direction (e.g., greater in an anticlockwise direction than a clockwise direction or vice versa). In this way, upon activation of the driving means, the valve may be forced to rotate from the first position to a second position.

The biasing means 160 in this example may further comprise fixing means for fixing the valve 150 in the second position once rotation of the valve from the first to the second position has occurred.

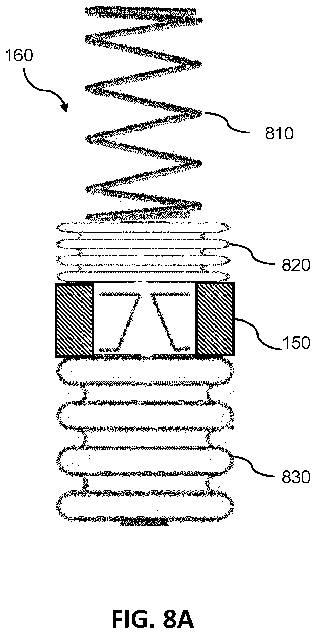

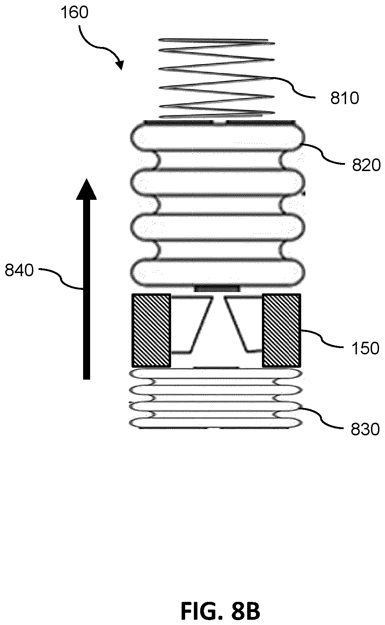

Referring now to Figs. 8A and 8B, there is depicted a passive pump valve 150 according to an embodiment of the invention.

In this embodiment, biasing system 160 comprises a spring 810, a first bellow 820 connected to the spring, and a second bellow 830 connected to the first bellow such that fluid can flow between the first and second bellows. The valve 150 is positioned between the first and second bellows.

Fig. 8A shows the valve 150 in a first position in which the valve prevents the flow of fluid in the first direction within the first passage. The gravitational force on the system causes the spring to extend and the spring force generated causes the compression of the first bellow 820.

When the driving means 120 is activated, the action of the driving means causes the valve 150 and the biasing system 160 to vibrate up and down. During downward movement of the valve 150, fluid is forced from the second bellow 830 that lies below the valve to the first bellow 820 that lies above the valve. During upward movement of the valve, due to the biasing means of the spring, only a fraction of fluid returns to the second bellow 830. As such, with every vibratory cycle there is a net flow of liquids and/or gases from the second bellow to the top bellow in the direction indicated by the arrow 840.

Thus, when the driving means is activated, the biasing system 160 is configured to interact with the action of the driving means which causes the biasing system 160 and the valve 150 to vibrate, so as to bias the valve to a second position (as shown in Fig. 8B) in which the valve permits the flow of liquids and/or gases along the first passage in the first direction from the second bellow to the first bellow.

When the driving means is deactivated, the spring force applied by the spring 810 to the biasing system 160 may slowly push fluid from the first bellow 820 to the second bellow 830. Hence the valve may be configured to return to the first position upon deactivation of the driving means.

When any of the valve and biasing system configuration described above are applied to an oral health care device in which the treatment component is configured, during use of the oral health care device on a subject, to engage with an oral surface of the subject the first biasing configuration may be configured such that, when the treatment component engages with the oral surface, the first biasing configuration interacts with the engagement of the treatment component with the oral surface of the subject to bias the valve to the first position. When the treatment component engages with the oral surface of the user, the vibration of the device caused by the action of the driving means may be damped. This may result in the first biasing configuration overcoming the force applied to the valve by the second biasing configuration during vibration of the device such that the valve returns to the first position upon engagement of the treatment component with an oral surface of the user. This may help to provide a precise time window in which the valve is in the second position and permits a flow of liquids and or gases within the first passage in the first direction.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. An oral health care device (100) comprising:
a treatment component (110) for performing an oral health care treatment;
driving means (120) adapted when activated to perform an action that causes motion of the treatment component;
a first passage (140) configured to permit liquids and/or gases to flow within the first passage in a first direction;
a valve (150) configured to control the flow of liquids and/or gases within the first passage; and
a biasing system (160) for biasing the position of the valve, the biasing system comprising:
a first biasing configuration adapted to bias the valve to a first position when the driving means is not activated, wherein in the first position the valve prevents the flow of liquids and/or gases in the first direction within the first passage; and
a second biasing configuration adapted to interact with the action of the driving means when the driving means is activated to bias the valve to a second position, wherein in the second position the valve permits the flow of liquids and/or gases in the first direction within the first passage.

2. The oral health care device of claim 1, wherein the first passage comprises an inlet (145) for receiving, during use of the oral health care device on a subject, liquids and/or gases from the oral cavity of the subject.

3. The oral health care device of any preceding claim, wherein the first biasing configuration comprises at least one of:
a spring;
a magnet;
a gravitational force applied to the valve; and
a frictional force applied to the valve.

4. The oral health care device of any preceding claim, wherein the second biasing configuration comprises at least one of:
a spring;
a magnet;
a gravitational force applied to the valve;
a frictional force applied to the valve;
a negative pressure system adapted to apply a pressure to the valve; and
at least one support structure configured to urge the valve towards the second position.

5. The oral health care device of claim 4, wherein when the driving means is activated the action of the driving means causes the valve to vibrate, and
wherein the second biasing configuration comprises the negative pressure system, the negative pressure system comprising a pump (320) configured to apply a suction force to the valve such that when the valve is caused to vibrate the suction force biases the valve to the second position.

6. The oral health care device of any of claims 4 and 5, wherein the biasing system comprises a guide structure (410) configured to guide the movement of the valve between the first and second positions, and
wherein the second biasing configuration comprises the at least one support structure, and the at least one support structure comprises a plurality of flexible support structures (420) disposed on an inner surface of the guide structure and configured to support the valve,
wherein, when the driving means is activated, the action of the driving means causes the plurality of flexible support structures to vibrate, and
wherein the vibration of the plurality of flexible support structures biases the valve to the second position.

7. The oral health care device of claim 6, wherein the biasing system further comprises a non-Newtonian material (510) between the guide structure and the plurality of flexible support structures.

8. The oral health care device of any of claims 6 and 7, wherein the plurality of flexible support structures comprises a plurality of elongate projections, wherein each of the plurality of elongate projections extends at an angle to the direction between the first and second positions.

9. The oral health care device of any of claims 4-8, wherein the second biasing configuration comprises the at least one support structure and the at least one support structure comprises a channel (620) for guiding the valve between the first and second positions,
wherein the channel comprises at least one helical groove (630) extending along a surface of the channel between the first and second positions and the valve comprises at least one protrusion (610) configured to slot into the at least one helical groove of the channel,
wherein the second biasing configuration is adapted such that, when the driving means is activated, the action of the driving means causes the channel to perform rotary vibration and the rotary vibration of the channel biases the valve to the second position.

10. The oral health care device of any of claims 4-9, wherein the second biasing configuration comprises the at least one support structure and the at least one support structure comprises a channel for guiding the valve between the first and second positions,
wherein the channel comprises at least one helical protrusion extending along a surface of the channel between the first and second positions and the valve comprises at least one groove configured to accommodate the at least one helical protrusion of the channel,
wherein the second biasing configuration is adapted such that, when the driving means is activated, the action of the driving means causes the channel to perform rotary vibration and the rotary vibration of the channel biases the valve to the second position.

11. The oral health care device of any of claims 4-10, wherein the valve comprises a disc with a partial opening and the second biasing configuration comprises a housing (710) for the disc configured to apply a frictional force to the valve, and
wherein, when the driving means is activated, the action of the driving means causes the disc to vibrate, and
wherein the housing of the second biasing configuration interacts with the vibration of the disc via a friction force to bias the disc towards a second position.

12. The oral health care device of any of claims 4-11, wherein the biasing system comprises:
a spring (810),
a first bellow (820) connected to the spring, and
a second bellow (830) connected to the first bellow such that fluid can flow between the first and second bellows, and
wherein the valve is positioned between the first and second bellows.

13. The oral health care device of any preceding claim, wherein the oral health care device further comprises a second passage configured to permit liquids and/or gases to flow within the second passage in a second direction, and
wherein the valve is further configured to control the flow of liquids and/or gases within the second passage, such that in the first position the valve permits the flow of liquids and/or gases in the second direction within the second passage, and in the second position the valve prevents the flow of liquids and/or gases in the second direction within the second passage.

14. The oral health care device of any preceding claim, wherein the treatment component is configured, during use of the oral health care device on a subject, to engage with an oral surface of the subject, and
wherein the first biasing configuration is configured such that, when the treatment component engages with the oral surface, the first biasing configuration interacts with the engagement of the treatment component with the oral surface of the subject to bias the valve to the first position.

15. The oral health care device of any preceding claim, wherein the treatment component comprises a brush head component for brushing the teeth and gums of a subject during use of the oral health care device.
